# EUROPEAN PATENT APPLICATION

(11) **EP 2 372 401 A1**
(43) Date of publication of application: **05.10.2011**
(21) Application number: 11155603.1
(22) Date of filing: 23.02.2011
(51) Int. Cl.: G01V 1/38

(54) **Method for towing marine sensor streamers**

(30) Priority: 24.02.2010 US 660322
(71) Applicant: PGS Geophysical AS, 1366 Lysaker (NO)
(72) Inventor: Sudow, Gustav Goran Mattias, 162 54 Vaillingby (SE); Lindqvist, Ulf Peter, 141 72 Segeltorp (SE); Juhasz, Andras Robert, 129 53 Hagersten (SE); Mattsson, Rune Johan Magnus, 14265 Trångsund (SE); Tenghamn, Stig Rune Lennart, Katy, TX 77450 (US)
(74) Representative: Skone James, Robert Edmund

(57) **Abstract**

A method for operating a geophysical sensor streamer (20) in body of water includes operating a remotely operated vehicle (18) coupled to a forward end of the streamer to tow the streamer in the water. Signals generate by sensors (22) on the streamer (20) are communicated substantially in real time to a recording unit on a survey vessel using at least one of electrical and optical cables in an umbilical cable connecting the remotely operable vehicle to the survey vessel.

## Description

### Field of the Invention

The invention relates generally to the field of towed marine geophysical survey systems. More specifically, the invention relates to methods and systems to enable towing sensor streamers at greater depth in the water than by using conventional towing devices.

### Background Art

Marine geophysical sensor streamers, for example seismic and/or electromagnetic sensor streamers are essentially long cables (several km in length) towed behind a vessel. Seismic streamers typically are operated at only a few meters water depth. Electromagnetic sensors may be operated at greater depths, on the order of several hundred to several thousand meters.

Deep operated seismic sensor cables, called "ocean bottom cables" that are placed on the water bottom are also known in the art. There are also individual sensor stations called "nodes" that have self contained signal recording devices. In either of the foregoing sensing systems, it is necessary to retrieve the system to the water surface. Thus, towed sensing cables may have the advantage of real time signal communication with the recording vessel.

It has been impracticable to tow such sensing cables at depths of several hundred to several thousand meters from a surface vessel using conventional towing equipment because of the fact that the towing force is dissipated through friction along the extended lead in cable between the sensor cable and the vessel.

There exists a need for a system and technique to tow marine geophysical sensor cables are relatively great water depth.

### Summary of the Invention

A method for operating a geophysical sensor streamer in body of water includes operating a remotely operated vehicle coupled to a forward end of the streamer to tow the streamer in the water. Signals generated by sensors on the streamer are communicated substantially in real time to a recording unit on a survey vessel using at least one of electrical and optical cables in an umbilical cable connecting the remotely operable vehicle to the survey vessel.

Other aspects and advantages of the invention will be apparent from the following description and the appended claims.

### Brief Description of the Drawings

FIG. 1 shows a vertical section view of one system according to the invention.

Fig. 2 shows a plan view of a multiple streamer system.

### Detailed Description

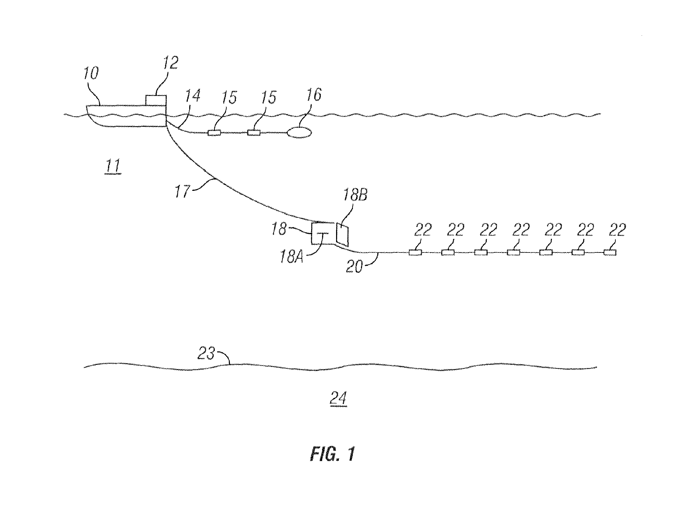

FIG. 1 shows a geophysical survey vessel 10 moving along the surface of a body of water 11 such as a lake or the ocean. The vessel may include equipment thereon, shown generally at 12 and referred to for convenience as a "recording system". The recording system 12 typically includes devices such as a data recording unit (not shown separately) for making a record with respect to time of signals generated by various sensors in the acquisition system. The recording system 12 also typically includes navigation equipment (not shown separately) to determine and record, at selected times, the geodetic position of the vessel 10.

The vessel may tow one or more source cables 14. The source cable 14 may include thereon a seismic energy source 16 such as an air gun or array of such air guns. The source cable 16 may also include an electromagnetic energy source such as a pair of spaced apart electrodes 15. Operation of the sources is well known in the art and need not be repeated here.

In the present example, a sensor streamer cable 20 may be towed in the water 11 by a remotely operated vehicle (ROV) 18. The streamer cable 20 may include a plurality of geophysical sensors 22, non-limiting examples of which are hydrophones, geophones, accelerometers, magnetometers, wire coils, spaced apart electrodes, or combinations thereof. The sensors detect energy in response to seismic and/or electromagnetic energy imparted into the formations 24 below the water bottom 23.

The ROV receives power for propulsion and control signals to change depth and direction (using diving planes 18A and rudder 18B) from an umbilical cable 17 connected from the ROV 18 to the vessel 10. The umbilical cable 17 also includes electrical and/or optical conductors that enable real time communication of signals detected by the sensors to the recording unit 12. This is in contrast to nodal based, ocean bottom or autonomously operated vehicle towing systems, which require data storage, storage equipment recovery and downloading of the recorded information. The present example enables data quality determination essentially while recording is underway, so that appropriate corrective action may be taken in the event of sensor degradation or failure.

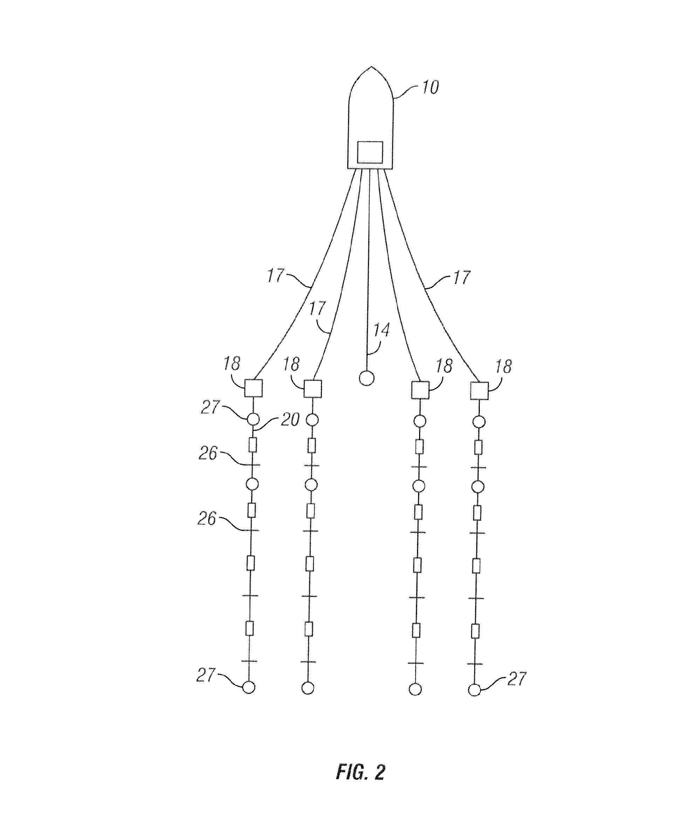

If it is desirable to operate more than one streamer at the same time, FIG. 2 shows an example of how this may be performed using streamer cables having additional navigation components to avoid tangling and fouling. Each of four sensor streamers 20 as explained with reference to FIG. 1 may be coupled at its forward end to a respective ROV 18. Each ROV may be coupled to the vessel 10 by a respective umbilical line 17 as explained above.

In the present example, the streamers 20 may be caused to remain in a selected pattern (e.g., such as parallel as shown) and to be responsive to the effects of water cross currents to maintain such pattern by the use of lateral force and control (LFD) devices 26 disposed at selected positions along the streamer. See, for example, U.S. Patent No. 6,144,342 issued to Bertheas et al. Lateral distance between the streamers 20 at selected points therealong (to maintain the selected pattern) may be determined using an acoustic range finding system, components of which are shown at 27. See for example, U.S. Patent No. 7,376, 045 issued to Falkenberg et al. and commonly owned with the present invention.

Towing marine geophysical streamers using methods according to the invention may provide better control over streamer geometry at great water depth and may enable continuous signal communication with a vessel-borne recording system, thus reducing the possibility of sensor or streamer failure going unnoticed before an entire survey segment has been completed.

## Claims

1. A method for operating a geophysical sensor streamer in body of water, comprising:
operating a remotely operated vehicle coupled to a forward end of the streamer to tow
the streamer in the water; and
communicating signals generated by sensors on the streamer substantially in real time
to a recording unit on a survey vessel using at least one of electrical and optical cables in an umbilical cable connecting the remotely operable vehicle to the survey vessel.

2. The method of claim 1 further comprising:
operating a plurality of remotely operated vehicles each connected to the vessel by a
respective umbilical cable, each vehicle towing a forward end of a marine geophysical sensor streamer;
communicating signals generated by sensors on each streamer substantially in real
time to a recording unit on a survey vessel using at least one of electrical and optical cables in an umbilical cable connecting the remotely operable vehicle to the survey vessel; and
steering the streamers to maintain a selected pattern while moving in the water.

3. The method of claim 2 wherein the steering comprises operating a lateral force and depth control device.

4. The method of claim 2 wherein the steering comprises operating an acoustic range finding device.

5. The method of any of the preceding claims wherein the sensors comprise at least one of hydrophones, geophones, accelerometers, magnetometers, wire coils, spaced apart electrodes, of combinations thereof.
